# FASCICULE DE BREVET EUROPEEN

(11) **EP 1 541 628 B1**
(45) Date de publication et mention de la délivrance du brevet: **01.03.2006**
(21) Numéro de dépôt: 04292763.2
(22) Date de dépôt: 24.11.2004
(51) Int. Cl.: C08K 5/51, C08L 33/12

(54) **Matériau polymère méthacrylique à résistance au feu ameliorée**
Metacrylpolymermaterial mit verbesserten Flammschutzeigenschaften
Flame resistant methacrylic polymer material

(30) Priorité: 12.12.2003 FR 0314589; 20.02.2004 FR 0401725
(43) Date de publication de la demande: 15.06.2005
(73) Titulaire: Arkema, 92800 Puteaux (FR)
(72) Inventeur: Chenard, Jean-Yves, 64000 Pau (FR); Pery, Stéphanie, 64150 Mourenx (FR)

(56) Documents cités:
- FR-A- 2 831 545
- US-A- 3 347 818

## Description

La présente invention concerne le domaine des matériaux utilisables pour la fabrication d'articles appartenant au domaine électrique (tels que des boîtiers électriques) et plus particulièrement au domaine des luminaires ou de la signalétique dans les lieux publics comme par exemple les panneaux indicateurs de sortie de secours. Elle a plus précisément pour objet un matériau polymère méthacrylique diffusant la lumière et présentant une résistance au feu améliorée.

On connaît notamment par la demande **WO 03/037975** l'intérêt présenté par les (co)polymères méthacryliques dans la confection des articles sus mentionnés, en raison de leurs propriétés optiques exceptionnelles, notamment de transparence.

On sait également que ces (co)polymères méthacryliques posent des problèmes de résistance au feu qui empêchent leur utilisation pour la fabrication de ces articles. Ces derniers sont en effet généralement soumis à des températures élevées soit par le rayonnement des sources lumineuses qui les éclairent soit, le cas échéant, par un contact prolongé non souhaité avec un élément chauffant. C'est pourquoi il est nécessaire, en vue d'obtenir des matériaux adaptés à la fabrication de ces articles, de combiner ces (co)polymères méthacryliques avec une certaine quantité d'agents ignifugeants.

La demande **WO 03/037975** précitée recommande ainsi d'utiliser comme matériau polymère méthacrylique une combinaison spécifique d'un (co)polymère méthacrylique contenant majoritairement des motifs méthacrylate de méthyle, avec, comme agents ignifugeants, au moins un composé polyphosphonate halogéné et au moins un composé ester neutre halogéné de l'acide phosphorique.

Les matériaux décrits par cette demande se présentent généralement sous la forme de plaques d'épaisseur variable qui sont ensuite façonnées notamment par thermoformage, découpage, collage pour donner les articles recherchés. Or l'efficacité ignifugeante des composés précités diminue fortement avec l'épaisseur de ces plaques, de sorte qu'elle devient insuffisante pour les plaques de faible épaisseur.

La présente invention a pour but de remédier à cet inconvénient sans altérer les propriétés optiques attendues par ailleurs pour le matériau. Elle repose sur le fait qu'il a été trouvé que l'incorporation d'une silice spécifique aux agents ignifugeants décrits par la demande **WO 03/037975** permet, de façon surprenante, d'améliorer la résistance au feu du matériau polymère méthacrylique, particulièrement lorsque ce dernier se présente sous la forme de fines plaques, par exemple d'épaisseur comprise entre 2,5 et 8 mm.

La présente demande a donc pour objet un matériau polymère méthacrylique diffusant la lumière comprenant :
- de 80 à 90 % d'un (co)polymère méthacrylique contenant majoritairement des motifs méthacrylate de méthyle,
- de 5 à 15 % d'un agent ignifugeant compatible avec le méthacrylate de méthyle et le (co)polymère méthacrylique, ledit agent étant choisi parmi un composé polyphosphonate halogéné, un composé ester neutre halogéné de l'acide phosphorique ou un mélange de ces 2 composés, et
- de 1 à 5% d'une silice ayant une taille de particule élémentaire inférieure à 500 nm, de préférence inférieure à 100 nm.

En l'absence d'indication contraire, les pourcentages indiqués dans le présent texte sont des pourcentages en poids exprimés sur la base du poids total du matériau polymère.

Le matériau polymère selon l'invention possède des propriétés optiques avantageuses et conformes à celles qui sont attendues des matériaux utilisés pour la confection des dispositifs lumineux d'éclairage, d'affichage ou de signalisation (destinés par exemple aux panneaux publicitaires ou aux enseignes lumineuses), qu'il s'agisse de la transmission de la lumière dans le visible, ou d'un pouvoir diffusant de la lumière suffisamment élevé pour assurer un éclairement aussi uniforme que possible.

Le matériau polymère selon l'invention offre ces propriétés combinées à une résistance au feu tout à fait remarquable s'agissant d'un matériau acrylique. Cette dernière propriété est mesurée selon une méthode mise au point par la Commission Electrotechnique Internationale (CEI) et répertoriée sous le numéro 60695-2-12.

Cette méthode consiste à appliquer sur le matériau polymère à tester, durant 30 secondes et avec une force déterminée, l'extrémité d'un fil incandescent préalablement porté à une température connue, puis à mesurer le temps d'extinction des flammes ou de disparition de l'incandescence communiquée au matériau, après retrait du fil.

Le matériau est considéré comme ayant subi l'essai avec succès si la flamme ou l'incandescence s'éteint moins de 30 secondes après le retrait du fil, et ce lors de trois tests successifs. La méthode débute en portant le fil incandescent à une température de 960 °C : en cas d'échec de l'essai, la température du fil est abaissée par pas de 50 °C, jusqu'à obtenir un essai réussi. La température correspondante, dite température de résistance au fil incandescent ou Glow Wire Resistance (GWR) caractérise la résistance au feu du matériau, cette dernière étant d'autant meilleure que le GWR est plus élevé. Cette méthode permet donc d'obtenir une évaluation relative de la résistance au feu des matériaux testés.

Le (co)polymère méthacrylique contenant majoritairement des motifs méthacrylate de méthyle comprend de 51 à 100%, de préférence de 80 à 99% en poids de motifs dérivant du monomère méthacrylate de méthyle et de 0 à 49%, de préférence de 1 à 20% en poids de motifs dérivant de comonomères à insaturation monoéthylénique copolymérisables avec le méthacrylate de méthyle.

Le(s) comonomère(s) à insaturation monoéthylénique copolymérisable(s) avec le monomère méthacrylate de méthyle est (sont) notamment choisi(s) parmi les monomères acryliques, méthacryliques et vinylaromatiques.

Comme monomères acryliques, on peut citer l'acide acrylique, les acrylates d'alkyle dans lesquels le groupe alkyle a de 1 à 10 atomes de carbone (comme l'acrylate de méthyle, l'acrylate d'éthyle, l'acrylate de n-butyle, de 2-éthylhexyle, d'isobutyle), les acrylates d'hydroxyalkyle ou d'alkoxyalkyle, dans lesquels le groupe alkyle a de 1 à 4 atomes de carbone, l'acrylamide, l'acrylonitrile.

Comme monomères méthacryliques, on peut citer l'acide méthacrylique, les méthacrylates d'alkyle dans lesquels le groupe alkyle a de 2 à 10 atomes de carbone (comme le méthacrylate d'éthyle, d'isobutyle, de butyle secondaire, de butyle tertiaire), le méthacrylate d'isobornyle, le méthacrylonitrile, les méthacrylates d'hydroxyalkyle ou d'alcoxyalkyle dans lesquels le groupe alkyle a de 1 à 4 atomes de carbone.

Comme monomères vinylaromatiques, on peut citer le styrène, les styrènes substitués (comme l'alpha-méthyl-styrène, le monochlorostyrène et le tert.-butyl-styrène).

Selon une variante préférée de l'invention, le (co)polymère méthacrylique mis en oeuvre dans le matériau selon l'invention est un homopolymère de méthacrylate de méthyle.

Comme indiqué ci-dessus, le matériau polymère méthacrylique diffusant la lumière, selon l'invention, comprend en outre de 5 à 15 %, de préférence de 10 à 12%, d'un agent ignifugeant compatible avec le monomère méthacrylate de méthyle et le (co)polymère méthacrylique. Par compatible, on entend que les dits agents se mélangent de manière aisée avec le monomère méthacrylate de méthyle et le (co)polymère méthacrylique et ne démixent pas dans le temps.

Le composé polyphosphonate halogéné utilisé est décrit dans le document US 3058941. On préfère mettre en oeuvre un polyphosphonate chloré, et en particulier le polyphosphonate chloré vendu par la société Clariant sous la dénomination « Exolit 5087 ».

On peut citer comme exemple d'ester neutre halogéné de l'acide phosphorique, les phosphates de tris(halogénoalkyle) dans lesquels l'halogène est du chlore ou du brome et le groupe alkyle a de 1 à 4 atomes de carbone, tels que le phosphate de tris(chlorométhyle), le phosphate de tris(chloroéthyle), le phosphate de tris(bromométhyle), le phosphate de tris(bromoéthyle), le phosphate de tris(chloropropyle), le phosphate de tris(chloroisopropyle) et le phosphate de tris(bromopropyle). Le phosphate de tris(2-chloroisopropyle) (désigné ci-après par TCIP et ayant pour numéro CAS 13674-84-5) est particulièrement bien adapté au matériau polymère méthacrylique selon l'invention.

On préfère utiliser comme silice une silice précipitée.

Selon une autre variante de l'invention, prise éventuellement en combinaison avec les précédentes, on utilise une silice ayant une taille de particule élémentaire inférieure à 15 nm, de préférence inférieure à 10 nm.

Des silices, notamment des silices précipitées, ayant une taille de particule élémentaire inférieure à 500 nm, à 100 nm, ou même à 15 ou 10 nm sont disponibles dans le commerce.

Par taille de particule élémentaire, on entend la taille de la particule élémentaire présente dans l'agrégat de silice, l'agrégat étant le plus petit édifice non sécable constitué de particules élémentaires fusionnées ou reliées entre elles par des liaisons fortes covalentes.

La silice employée conformément à l'invention présente habituellement une haute dispersibilité, notamment en milieu aqueux.

Elle peut être de préférence une silice conforme au brevet **EP 0520862** (ou aux demandes **WO 95/09127** ou **WO 95/09128)** et/ou préparée selon le procédé décrit dans ce brevet (ou dans ces demandes), ladite silice ayant, de manière préférée, subi ensuite un broyage (notamment à l'aide d'un broyeur mécanique, par exemple du type Forplex) ou, de manière encore plus préférée, une micronisation (en particulier à l'aide d'un microniseur, comme un broyeur à jet d'air).

Elle peut se présenter, avant micronisation ou avant broyage subséquents éventuels, sous la forme de granulés ayant une taille comprise entre 1 et 10 mm ou sous la forme d'une poudre ayant une taille moyenne comprise entre 5 et 70 µm.

De préférence, elle se présente, avant micronisation ou avant broyage subséquents éventuels, sous la forme de billes sensiblement sphériques ayant une taille moyenne d'au moins 80 µm, en particulier d'au moins 100 µm, par exemple d'au moins 150 µm, et habituellement d'au plus 300 µm. Cette taille moyenne est déterminée selon la norme NF X 11507 (décembre 1970) par tamisage à sec et détermination du diamètre correspondant à un refus cumulé de 50 %. Une telle silice sous forme de billes sensiblement sphériques est facilement manipulable et exempte de poussière, et donc avantageuse au plan de la fabrication industrielle du matériau.

De manière préférée, la silice mise en oeuvre selon l'invention est issue de la micronisation d'une silice se présentant sous la forme de billes sensiblement sphériques et se trouve alors sous forme de microbilles. La silice employée selon l'invention, lorsqu'elle a été micronisée ou broyée préalablement à sa mise en oeuvre, possède habituellement (après cette micronisation ou ce broyage) une taille médiane de particules (notamment mesurée à l'aide d'un granulomètre Malvern) inférieure à 20 µm, en particulier inférieure à 12 µm. De préférence, lorsqu'elle a été micronisée, sa taille médiane de particules est d'au plus 5 µm, notamment comprise entre 0,5 et 5 µm, par exemple entre 1 et 4 µm.

Une silice pouvant être utilisée dans la présente invention peut être obtenue par exemple auprès de la société Rhodia sous la dénomination RP 635.

Selon un mode de réalisation de l'invention particulièrement avantageux, pris éventuellement en combinaison avec les précédents, le matériau selon l'invention comprend :
- de 82 à 86 % du (co)polymère méthacrylique,
- de 10 à 12% de l'agent ignifugeant, et
- de 2 à 4 % de silice précipitée.

Ce matériau permet avantageusement d'atteindre un GWR supérieur ou égal à 850°C, et parfois même égal à 960°C, y compris lorsqu'il se présente sous la forme de plaques de faible épaisseur, par exemple comprise entre 2,5 et 8 mm.

Plus précisément, un tel matériau comprend de manière préférée :
- de 82 à 86% du (co)polymère méthacrylique,
- de 10 à 12% de TCIP,
- de 2 à 4% de silice RP 635.

Outre les constituants mentionnés ci-dessus, le matériau polymère méthacrylique selon l'invention comprend en outre une quantité appropriée d'un ou plusieurs composants diffusant la lumière, sous forme de particules de composé organique ou minéral de dimension appropriée. Il peut s'agit de pigments ou de colorants, comme le dioxyde de titane, le carbonate de calcium, le sulfate de calcium, le sulfate de baryum ou le noir de carbone. En général, le domaine de teneur en poids de ces composés dans le matériau est compris entre 0,01 et 5 %.

Le matériau polymère méthacrylique selon l'invention peut en outre éventuellement contenir de 5 à 15 % d'un composé modifiant choc , comme décrit dans la demande **WO 03/037975**.

Le matériau polymère méthacrylique selon l'invention se présente avantageusement sous la forme de plaques. Celles-ci peuvent être fabriquées selon le procédé par coulée qui est décrit dans la demande **WO 03/037975.**

Ce procédé comprend la mise en oeuvre d'une composition méthacrylique polymérisable comprenant un élément polymérisable pour former le (co)polymère méthacrylique, le ou les agents ignifugeants, la silice, le composant diffusant la lumière et, éventuellement le composé modifiant choc. On introduit cette composition dans un moule constitué de deux plaques en verre séparées par un joint en polymère (polychlorure de vinyle, par exemple) qui assure l'étanchéité et dont l'épaisseur détermine l'épaisseur de la plaque du matériau. Le moule est placé dans une étuve ventilée ou en piscine chauffée afin de permettre la polymérisation des monomères. Le cycle de polymérisation comprend une étape de polymérisation à une température de l'ordre de 50-60°C pour obtenir un taux de conversion de 95 % environ, puis une étape de post-polymérisation à une température de l'ordre de 120°C. Après refroidissement, on retire du moule la plaque obtenue. Les plaques obtenues ont une épaisseur déterminée par l'épaisseur du joint.

L'élément polymérisable est constitué essentiellement du méthacrylate de méthyle et, éventuellement, des comonomères à insaturation monoéthylénique copolymérisables avec le méthacrylate de méthyle, tels que ceux mentionnés précédemment. Le méthacrylate de méthyle peut être avantageusement remplacé par un mélange dudit monomère avec un prépolymère de méthacrylate de méthyle ayant un taux de conversion de 6 à 15% (appelé sirop).

La silice mise en oeuvre se disperse facilement après mélange avec le méthacrylate de méthyle (ou le mélange de ce dernier avec le sirop) sous l'effet d'une agitation même modérée.

Outre les produits définis ci-dessus, le procédé de fabrication du matériau polymère méthacrylique selon l'invention comprend également, comme décrit dans la demande WO 03/037975, l'ajout à la composition polymérisable d'au moins un amorceur de polymérisation radicalaire, d'un agent de transfert de chaîne, d'agents démoulant, antioxydant ou stabilisant U.V.

Selon une variante préférée de l'invention, les plaques du matériau polymère méthacrylique définies précédemment ont une épaisseur comprise entre 2 et 8 mm, de préférence entre 3 et 6 mm. Ces plaques de faible épaisseur et présentant un GWR, et donc une sécurité améliorés, permettent de diversifier les applications des matériaux acryliques, dans les domaines du luminaire ou de la signalétique.

Les exemples suivants sont donnés à titre purement illustratif de l'invention, et ne sauraient en aucun cas être interprétés comme pouvant en limiter la portée.

### Exemple 1 : Plaque d'épaisseur 3 mm d'un matériau comprenant 84% de polyméthacrylate de méthyle (ou PMMA), 7% d'Exolit 5087, 5% de TCIP et 3,5% de silice

On prépare 450 g d'une composition polymérisable en ajoutant successivement sous agitation à 358,65 g d'un sirop de méthacrylate de méthyle (ci-après MAM) :
- 31,5 g (soit 7%) d'un polyphosphonate chloré vendu sous la dénomination Exolit 5087 par la société Clariant
- 22,5 g (soit 5%) de TCIP
- 15,75 g (soit 3,5 %) de silice ayant une taille de particule élémentaire d'environ 12 nm, (RP 635 de la société Rhodia),
- 2,25 g (soit 0,5 %) de BaSO₄ dispersé dans du dioctyl phtalate
- 0,27 g (soit 600 p.p.m.) de TiO₂ dispersé dans du dioctylphtalate
- 2,25 g d'une solution à 5% d' AzobisIsoButyroNitrile (ou AIBN) dans le MAM correspondant à 0,1125 g d'AIBN (250 p.p.m.)
- 3,33 g d' une solution à 1% dans le MAM de terpinène (agent de transfert de chaîne) correspondant à 0,0333 g de terpinène (74 p.p.m.)
- 13,5 g d'une solution à 1% de Tinuvin P dans le MAM (stabilisant UV dérivé du bertzotriazole vendu par la société CIBA) correspondant à 0,135 g de Tinuvin P (300 p.p.m.).

La composition polymérisable ainsi obtenue est agitée à température ambiante jusqu'à obtention d'un mélange d'aspect homogène. Elle est alors versée dans un moule formé de deux plaques de verre séparées par un joint en PVC et maintenues par des pinces pour obtenir une plaque d'épaisseur 3 mm.

Le moule rempli puis fermé est ensuite placé horizontalement dans une étuve à air ventilée. La composition est alors polymérisée pendant 1heure à 68 °C, puis durant 1h 40 minutes à 55°C. La température de polymérisation est ensuite augmentée en 1 heure jusqu'à atteindre 125 °C et est maintenue à cette valeur pendant 20 minutes.

Après refroidissement du moule, la plaque parallélépipédique (dimensions : 300 x 300 x 3 mm) est démoulée puis découpée en plaquettes carrées de 50 x 50 x 3 mm pour mesure de la résistance au fil incandescent (ou GWR) selon la norme CEI 60695-2-12. Le GWR obtenu est de 960 °C.

### Exemple A (comparatif selon WO 03/037975) :

On répète l'exemple 1 sans incorporer de silice.

On mesure un GWR de 750°C.

### Exemple B (témoin) :

On répète l'exemple 1 sans incorporer de silice, ni d'agent ignifugeant.

On mesure un GWR de 700°C.

On constate ainsi que le matériau selon l'invention permet une augmentation remarquable (environ 200°C) du GWR d'une plaque de 3 mm relativement au matériau ne comprenant pas de silice préparé conformément à l'enseignement du WO 03/037975.

### Exemple 2 : Plaque d'épaisseur 3 mm d'un matériau comprenant 84% de polyméthacrylate de méthyle (ou PMMA), 5% d'Exolit 5087, 5% de TCIP et 3,5% de silice

On répète l'exemple 1 en modifiant la teneur en Exolit 5087 et en incorporant 800 ppm de TiO₂ (au lieu de 600) et 0,65% de BaSO₄ (au lieu de 0,5%).

On mesure un GWR de 900°C.

### Exemple 3 : Plaque d'épaisseur 3 mm d'un matériau comprenant 84% de polyméthacrylate de méthyle (ou PMMA), 12% de TCIP et 3,5% de silice

On répète l'exemple 2 en incorporant comme agent ignifugeant 12% de TCIP.

On mesure un GWR de 850°C.

### Exemple 4 : Plaque d'épaisseur 4 mm d'un matériau comprenant 84% de polyméthacrylate de méthyle (ou PMMA), 7% d'Exolit 5087, 5% de TCIP et 3,5% de silice

On répète l'exemple 1 en utilisant un joint en PVC permettant l'obtention de plaques d'épaisseur 4 mm et sans incorporer de BaSO₄.

On mesure un GWR de 960°C.

### Exemple C (comparatif selon WO 03/037975) :

On répète l'exemple 4 sans incorporer de silice.

On mesure un GWR de 750°C.

### Exemple 5 : Plaque d'épaisseur 4 mm d'un matériau comprenant 84% de polyméthacrylate de méthyle (ou PMMA), 7% d'Exolit 5087, 5% de TCIP et 2% de silice

L'exemple 4 est répété en modifiant la teneur en silice, et en incorporant 0,5% de BaSO₄.

On mesure un GWR de 850°C.

### Exemple 6 : Plaque d'épaisseur 4 mm d'un matériau comprenant 84% de polyméthacrylate de méthyle (ou PMMA), 5% d'Exolit 5087, 5% de TCIP et 3,5% de silice

L'exemple 4 est répété en modifiant la teneur en Exolit 5087 et en incorporant 0,5% de BaSO₄.

On mesure un GWR de 900°C.

### Exemple 7: Plaque d'épaisseur 4 mm d'un matériau comprenant 84% de polyméthacrylate de méthyle (ou PMMA), 12% de TCIP et 3,5% de silice. L'exemple 6 est répété en utilisant comme seul agent ignifugeant 12% de TCIP.

On mesure un GWR de 850°C.

### Exemple 8 : Plaque d'épaisseur 5 mm d'un matériau comprenant 84% de polyméthacrylate de méthyle (ou PMMA), 5% d'Exolit 5087, 5% de TCIP et 3,5% de silice L'exemple 6 est répété en utilisant un joint en PVC permettant l'obtention de plaques d'épaisseur 5 mm et en modifiant très légèrement les teneurs en TiO₂ et BaSO₄.

On mesure un GWR de 900°C.

### Exemple 9 : Plaque d'épaisseur 6 mm d'un matériau comprenant 84% de polyméthacrylate de méthyle (ou PMMA), 7% d'Exolit 5087, 5% de TCIP et 3,5% de silice

L'exemple 8 est répété en en utilisant un joint en PVC permettant l'obtention de plaques d'épaisseur 6 mm, en modifiant la teneur en Exolit 5087 et en ajustant la teneur en TiO₂. On mesure un GWR de 960°C.

### Exemple D (comparatif selon WO 03/037975) :

On répète l'exemple 9 sans incorporer de silice.

On mesure un GWR de 900°C.

Les matériaux illustrés et les résultats obtenus sont récapitulés dans le tableau I suivant :

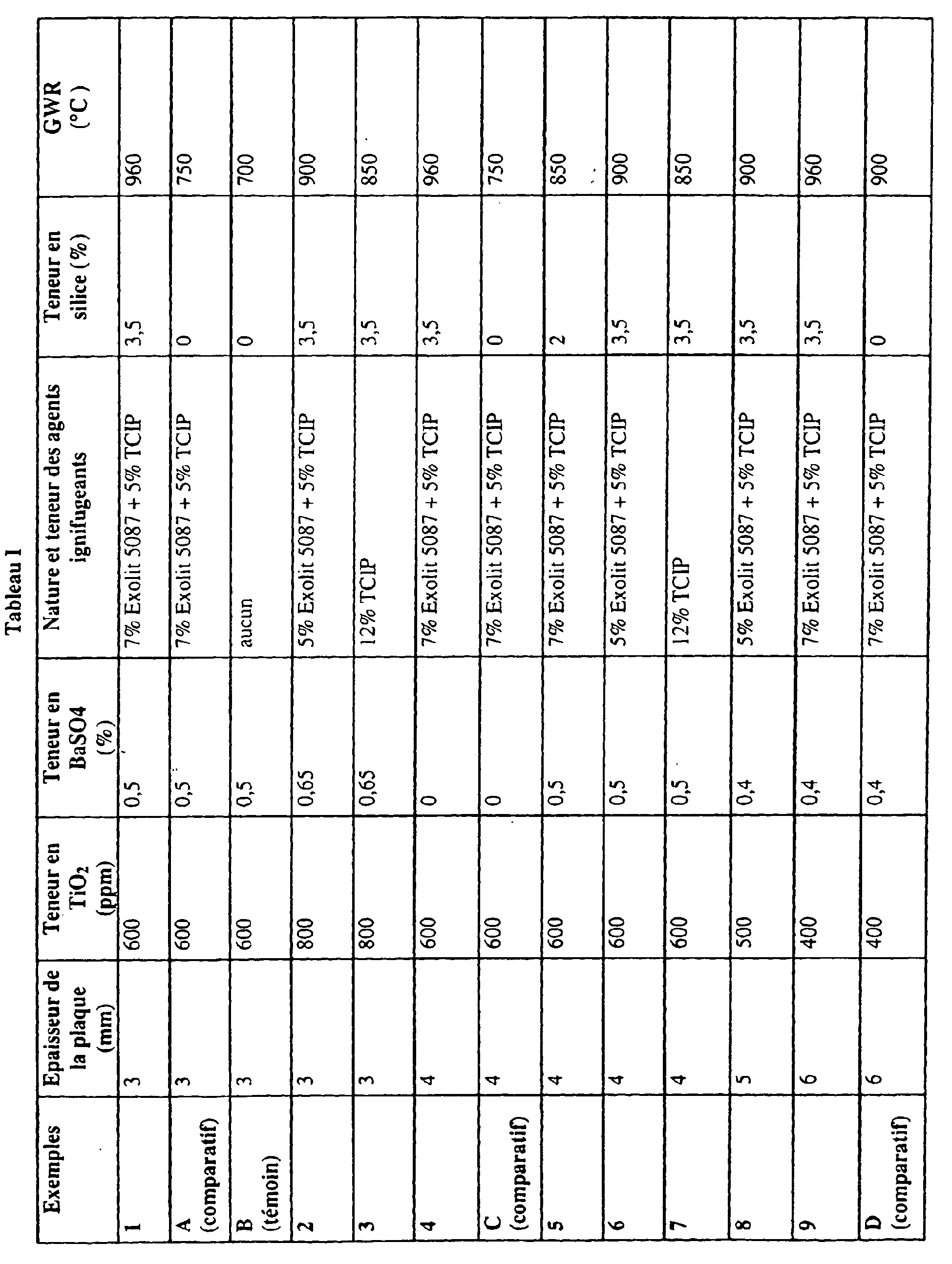

## Revendications

1. Matériau polymère méthacrylique diffusant la lumière comprenant :
- de 80 à 90 % d'un (co)polymère méthacrylique contenant majoritairement des motifs méthacrylate de méthyle,
- de 5 à 15 % d'un agent ignifugeant compatible avec le monomère méthacrylate de méthyle et le (co)polymère méthacrylique, ledit agent étant choisi parmi un composé polyphosphonate halogéné, un composé ester neutre halogéné de l'acide phosphorique ou un mélange de ces 2 composés, et
- de 1 à 5% d'une silice ayant une taille de particule élémentaire inférieure à 500 nm, de préférence inférieure à 100 nm.

2. Matériau selon la revendication 1, **caractérisé en ce que** le (co)polymère méthacrylique mis en oeuvre est un homopolymère de méthacrylate de méthyle.

3. Matériau selon l'une des revendications 1 ou 2, **caractérisé en ce que** le composé polyphosphonate halogéné utilisé est un polyphosphonate chloré.

4. Matériau selon l'une des revendications 1 à 3, **caractérisé en ce que** l'ester neutre halogéné de l'acide phosphorique est le phosphate de tris(2-chloroisopropyle).

5. Matériau selon l'une des revendications 1 à 4, **caractérisé en ce que** la silice est une silice précipitée

6. Matériau selon l'une des revendications 1 à 5, **caractérisé en ce que** la silice a une taille de particule élémentaire inférieure à 15 nm, de préférence inférieure à 10 nm.

7. Matériau selon l'une des revendications 1 à 6, **caractérisé en ce qu'**il comprend :
- de 82 à 86 % du (co)polymère méthacrylique,
- de 10 à 12% de l'agent ignifugeant, et
- de 2 à 4 % de silice précipitée.

8. Matériau selon la revendication 7, **caractérisé en ce qu'**il comprend :
- de 82 à 86 % du (co)polymère méthacrylique,
- de 10 à 12% de TCIP, et
- de 2 à 4 % de silice RP 635.

9. Matériau selon l'une des revendications 1 à 8, **caractérisé en ce qu'**il se présente sous la forme de plaques.

10. Matériau selon la revendication 9, **caractérisé en ce que** les plaques ont une épaisseur comprise entre 2,5 et 8 mm, de préférence entre 3 et 6 mm.

## Patentansprüche

1. Lichtstreuendes Methacrylpolymermaterial, enthaltend:
- 80 bis 90% eines Methacryl(co)polymers, das hauptsächlich Methylmethacrylat-Einheiten enthält,
- 5 bis 15% eines mit Methylmethacrylat-Monomer und dem Methacryl(co)polymer verträglichen Flammschutzmittels, das unter einer halogenierten Polyphosphonatverbindung, einer halogenierten neutralen Phosphorsäureesterverbindung oder einem Gemisch dieser beiden Verbindungen ausgewählt ist, und
- 1 bis 5% eines Siliciumdioxids mit einer Elementarteilchengröße von weniger als 500 nm und vorzugsweise weniger als 100 nm.

2. Material nach Anspruch 1, **dadurch gekennzeichnet, daß** es sich bei dem verwendeten Methacryl-(co)polymer um ein Homopolymer von Methylmethacrylat handelt.

3. Material nach Anspruch 1 oder 2, **dadurch gekennzeichnet, daß** es sich bei der verwendeten halogenierten Polyphosphonatverbindung um ein chlorierets Polyphosphonat handelt.

4. Material nach einem der Ansprüche 1 bis 3, **dadurch gekennzeichnet, daß** es sich bei dem halogenierten neutralen Phosphorsäureester um Tris(2-chloriso-propyl)phosphat handelt.

5. Material nach einem der Ansprüche 1 bis 4, **dadurch gekennzeichnet, daß** es sich bei dem Siliciumdioxid um ein gefälltes Siliciumdioxid handelt.

6. Material nach einem der Ansprüche 1 bis 5, **dadurch gekennzeichnet, daß** das Siliciumdioxid eine Elementarteilchengröße von weniger als 15 nm und vorzugsweise weniger als 10 nm aufweist.

7. Material nach einem der Ansprüche 1 bis 6, **dadurch gekennzeichnet, daß** es:
- 82 bis 86% des Methacryl(co)polymers,
- 10 bis 12% des Flammschutzmittels und
- 2 bis 4% gefälltes Siliciumdioxid enthält.

8. Material nach Anspruch 7, **dadurch gekennzeichnet, daß** es:
- 82 bis 86% des Methacryl(co)polymers,
- 10 bis 12% TCIP und
- 2 bis 4% Siliciumdioxid RP 635 enthält.

9. Material nach einem der Ansprüche 1 bis 8, **dadurch gekennzeichnet, daß** es in Form von Platten vorliegt.

10. Material nach Anspruch 9, **dadurch gekennzeichnet, daß** die Platten eine Dicke zwischen 2,5 und 8 mm und vorzugsweise zwischen 3 und 6 mm aufweisen.

## Claims

1. Light-scattering methacrylic polymer material comprising:
- from 80 to 90% of a methacrylic (co)polymer containing predominantly methyl methacrylate units;
- from 5 to 15% of a fire retardant compatible with the methyl methacrylate monomer and the methacrylic (co)polymer, the said fire retardant being chosen from a halogenated polyphosphonate compound, a halogenated neutral ester compound of phosphoric acid or a mixture of these two compounds; and
- from 1 to 5% of silica having an elementary particle size of less than 500 nm, preferably less than 100 nm.

2. Material according to Claim 1, **characterized in that** the methacrylic (co)polymer employed is a methyl methacrylate homopolymer.

3. Material according to either of Claims 1 and 2, **characterized in that** the halogenated polyphosphonate compound used is a chlorinated polyphosphonate.

4. Material according to one of Claims 1 to 3, **characterized in that** the halogenated neutral ester of phosphoric acid is tris(2-chloroisopropyl) phosphate.

5. Material according to one of Claims 1 to 4, **characterized in that** the silica is a precipitated silica.

6. Material according to one of Claims 1 to 5, **characterized in that** the silica has an elementary particle size of less than 15 nm, preferably less than 10 nm.

7. Material according to one of Claims 1 to 6, **characterized in that** it comprises:
- from 82 to 86% of the methacrylic(co)polymer;
- from 10 to 12% of the fire retardant; and
- from 2 to 4% of precipitated silica.

8. Material according to Claim 7, **characterized in that** it comprises:
- from 82 to 86% of the methacrylic (co)polymer:
- from 10 to 12% of TCIP; and
- from 2 to 4% of RP 635 silica.

9. Material according to one of Claims 1 to 8, **characterized in that** it is in the form of sheets.

10. Material according to Claim 9, **characterized in that** the sheets have a thickness of between 2.5 and 8mm, preferably between 3 and 6 mm.
